# EUROPÄISCHE PATENTSCHRIFT

(11) **EP 3 391 611 B1**
(45) Veröffentlichungstag und Bekanntmachung des Hinweises auf die Patenterteilung: **19.04.2023**
(21) Anmeldenummer: 16795098.9
(22) Anmeldetag: 15.11.2016
(51) Int. Cl.: H04L 9/40, G05B 19/042

(54) **ZUGANGSSCHLÜSSEL FÜR EIN FELDGERÄT**
ACCESS KEY FOR A FIELD DEVICE
CLÉ D'ACCÈS POUR APPAREIL DE TERRAIN

(30) Priorität: 15.12.2015 DE 102015121861
(43) Veröffentlichungstag der Anmeldung: 24.10.2018
(73) Patentinhaber: Endress+Hauser Flowtec AG, 4153 Reinach (CH)
(72) Erfinder: FINK, Nikolai, 4147 Aesch (CH); SIDDESH, Sushil, 4055 Basel (CH)
(74) Vertreter: Hahn, Christian
(86) Internationale Anmeldenummer: PCT/EP2016/077718
(87) Internationale Veröffentlichungsnummer: WO 2017/102211

(56) Entgegenhaltungen:
- EP-A1- 1 519 276
- EP-A2- 1 916 612
- DE-A1-102013 111 690
- DE-A1-102013 227 087
- US-A1- 2008 037 785

## Beschreibung

Die Erfindung bezieht sich auf ein Verfahren zum Bereitstellen eines Zugangsschlüssels für ein Feldgerät der Automatisierungstechnik. Ferner bezieht sich die Erfindung auf ein Verfahren zum Freischalten eines Feldgerätes, einen Zugangsschlüssel, ein Feldgerät und ein System der Automatisierungstechnik.

In der Prozessautomatisierungstechnik ebenso wie in der Fertigungsautomatisierungstechnik werden vielfach Feldgeräte eingesetzt, die zur Erfassung und/oder Beeinflussung von Prozessgrößen dienen. Zur Erfassung von Prozessgrößen dienen Messgeräte bzw. Sensoren, wie beispielsweise Füllstandsmessgeräte, Durchflussmessgeräte, Druck- und Temperatur-messgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters.

Eine Vielzahl solcher Feldgeräte wird von der Endress + Hauser-Gruppe hergestellt und vertrieben.

In modernen Industrieanlagen sind Feldgeräte in der Regel über Feldbus-systeme, wie z.B. Profibus^{®}, Foundation Fieldbus^{®}, HART^{®}, etc. mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüber-wachung sowie zur Inbetriebnahme der Feldgeräte. Die von den Feldgeräten, insbesondere von Sensoren, erfassten Messwerte werden über das angeschlossene Bussystem an eine oder gegebenenfalls auch an mehrere übergeordnete Einheit(en) übermittelt. Daneben ist auch eine Datenübertragung von der übergeordneten Einheit über das Bussystem an die Feldgeräte erforderlich; diese dient insbesondere zur Konfigurierung und Parametrierung von Feldgeräten oder zu Diagnosezwecken. Allgemein gesprochen, wird das Feldgerät über das Bussystem von der übergeordneten Einheit her bedient.

Neben einer drahtgebundenen Datenübertragung zwischen den Feldgeräten und der übergeordneten Einheit besteht auch die Möglichkeit einer drahtlosen Datenübertragung. Insbesondere in den Bussystemen Profibus^{®}, Foundation Fieldbus^{®} und HART^{®} ist eine drahtlose Datenübertragung über Funk spezifiziert. Ferner sind Funknetzwerke für Sensoren in dem Standard IEEE 802.15.4 näher spezifiziert.

Derartigen Industrieanlagen bzw. Automatisierungsanlagen sind in der Regel durch sehr hohe Sicherheitsanforderungen gekennzeichnet. Eine besondere Bedeutung gewinnt dieser Aspekt insbesondere bei drahtlosen Zugangssystemen.

Die Druckschrift DE102013111690 offenbart das Bereitstellen von Zugangsschlüsseln für Feldgeräte, wobei die Zugangsschlüssel einen Hashwert umfassen, der mittels eines Anlageschlüssels berechnet wird.

Die Druckschrift EP1519276A1 offenbart die Zugriffskontrolle auf einen Datenträger, wobei gerätespezifische Zugangsschüssel von einem Hauptschlüssel abgeleitet werden. Aus dem Stand der Technik sind Zugriffsmechanismen, wie bspw. die Eingabe eines Passwortes bzw. Zugangsschlüssels, wohl bekannt. Mit Hilfe dieser Zugriffsmechanismen soll sichergestellt werden, dass nur autorisierte Personen an die Feldgerätedaten, insbesondere Parameter kommen, um diese bspw. zu verändern bzw. editieren. Dies betrifft sowohl den direkten Zugriff auf ein Feldgerät durch einen Menschen, wie auch den Zugriff über ein Tool, wie beispielsweise eine Softwarekomponente.

Um in dem Fall, dass ein Zugangsschlüssel vergessen wird, ein Ersetzen eines Feldgerätes zu verhindern, ist in den heutigen Feldgeräten ein allgemein, d.h. für alle Feldgeräte dieses Herstellers, gültiger Zugangsschlüssel hinterlegt. Wird dieser hinterlegte Zugangsschlüssel an einem Feldgerät eingegeben, so wird dieses freigeschaltet und ein neuer individueller Zugangsschlüssel für dieses Feldgerät kann hinterlegt werden. Im Zuge der gesteigerten Sicherheitsanforderungen an Feldgeräte wird diese Lösung allerdings als unsicher erachtet, da somit zu jeder Zeit auf alle Feldgeräte zugegriffen werden kann.

Aufgabe der Erfindung ist es eine sicherere Methode bereitzustellen, mittels derer ein Zugriff auf ein Feldgerät regelbar ist.

Die Aufgabe wird erfindungsgemäß durch ein Verfahren gemäß Anspruch 1 gelöst.

Das erfindungsgemäße Verfahren ermöglicht es, dass jederzeit und beliebig oft ein Zugangsschlüssel, insbesondere durch einen Feldgerätehersteller, für ein spezielles Feldgerät erzeugt werden kann.

Eine vorteilhafte Ausführungsform des erfindungsgemäßen Verfahrens sieht vor, dass neben dem Identifikationsmerkmal auch eine Zeitinformation des Feldgerätes, für welches der Zugangsschlüssel bereitgestellt werden soll, ermittelt wird und bei der Bildung/Erzeugung/Generierung dem Zugangsschlüssel eine vorgegebene Gültigkeitsdauer mitgegeben wird.

Insbesondere kann die Ausführungsform vorsehen, dass die Zeitinformation aus einem Wert eines Betriebsstundenzählers des Feldgerätes abgeleitet wird. Durch die Bereitstellung der Zeitinformation kann ein Zugangsschlüssel mit einer definierten Gültigkeit bzw. Gültigkeitsdauer erzeugt werden.

Eine vorteilhafte Ausführungsform des erfindungsgemäßen Verfahrens sieht vor, dass die Zeitinformation in eine entsprechende binäre Form gewandelt wird und als ein erster Zeitstempel verwendet wird, wobei der erste Zeitstempel in einen zweiten Zeitstempel überführt wird, bei dem die vorgegebene Gültigkeitsdauer in Form einer Bitmaske der relevanten niederwertigen Bits ausmaskiert wird und zumindest ein Teil der ausmaskierten Bits als ein Offsetwert gespeichert wird und wobei der Zugangsschlüssel so gebildet/erzeugt/generiert wird, dass dieser zumindest die vorgegebene Gültigkeitsdauer in Form der Bitmaske oder eines Repräsentanten für die Bitmaske, den Offsetwert und den Hashwert umfasst, wobei der Hashwert zumindest aus dem mit Hilfe des ermittelten Identifikationsmerkmals aus der Datenbank ausgelesenen individuellen Schlüssel und dem zweiten Zeitstempel gebildet wird.

Als Bitmaske werden im Bereich der Informatik Bitfelder bezeichnet, deren Stellen selbst keine Informationen repräsentieren, sondern die dazu dienen, ein oder mehrere Bitfelder auszulesen und/oder zu manipulieren.

Eine vorteilhafte Ausführungsform des erfindungsgemäßen Verfahrens sieht vor, dass zur Bildung des Hashwerts zusätzlich der Offsetwert verwendet wird.

In dem Fall, dass der Offsetwert in die Bildung des Hashwerts einfließt, kann einer Manipulation entgegen gewirkt werden.

Die Aufgabe wird ferner durch ein Feldgerät gemäß Anspruch 6 gelöst.

Eine vorteilhafte Ausführungsform des erfindungsgemäßen Feldgeräts sieht vor, dass als Funktion eine Rücksetzung eines Passwortes für die Zugriffsberechtigung des Feldgerätes ausgeführt wird.

Eine alternative Ausführungsform des erfindungsgemäßen Feldgeräts sieht vor, dass als Funktion ein Zugriff auf Parameterwerte des Feldgerätes ermöglicht wird.

Eine weitere alternative Ausführungsform des erfindungsgemäßen Feldgeräts sieht vor, dass als Funktion das Freischalten einer Softwarefunktionalität in Bezug auf das Feldgerät ausgeführt wird.

Eine vorteilhafte Ausführungsform des erfindungsgemäßen Feldgeräts sieht vor, dass die Freischaltung bzw. Ausführung der zumindest einen Funktion für eine durch den Zugangsschlüssel vorgegebene Gültigkeitsdauer durchgeführt wird.

Eine vorteilhafte Ausführungsform des erfindungsgemäßen Feldgeräts sieht vor, dass die Freischaltung bzw. Ausführung der zumindest einen Funktion nur während der durch den Zugangsschlüssel vorgegebenen Gültigkeitsdauer durchgeführt werden kann.

Eine vorteilhafte Ausführungsform des erfindungsgemäßen Feldgeräts sieht vor, dass der Zugangsschlüssel ferner einen Offsetwert und eine Bitmaske oder deren Repräsentant umfasst, wobei der Vergleichshashwert anhand des in dem Feldgerät hinterlegten individuellen Schlüssels, dem durch den Zugangsschlüssel eingegebenen Offsetwerts und einem dritten Zeitstempel gebildet wird, wobei der dritte Zeitstempel durch Subtraktion des Offsetwerts von einem aktuellen Wert eines Betriebsstundenzählers und anschließender Ausmaskierung der relevanten niederwertigen Bits anhand der Bitmaske oder deren Repräsentant ermittelt wird.

Eine vorteilhafte Ausgestaltung des erfindungsgemäßen Feldgerätes sieht vor, dass der individuelle Schlüssel verschlüsselt in dem internen Speicher des Feldgeräts hinterlegt ist.

Ferner wird die Aufgabe durch einen Zugangsschlüssel gemäß Anspruch 13 gelöst.

Die Aufgabe wird ferner durch ein System der Automatisierungstechnik gemäß Anspruch 14 gelöst.

Eine vorteilhafte Ausgestaltung des erfindungsgemäßen Systems sieht vor, dass die Datenbank des Feldgeräteherstellers außerhalb der Automatisierungsanlage angeordnet ist.

Eine weitere vorteilhafte Ausgestaltung des erfindungsgemäßen Systems sieht vor, dass die individuellen Schlüssel verschlüsselt in der Datenbank abgelegt sind.

Die Erfindung wird anhand der nachfolgenden Zeichnungen näher erläutert. Es zeigt:
Fig. 1: ein erfindungsgemäßes System der Automatisierungstechnik, und
Fig. 2: ein Beispiel für das erfindungsgemäße Verfahren.

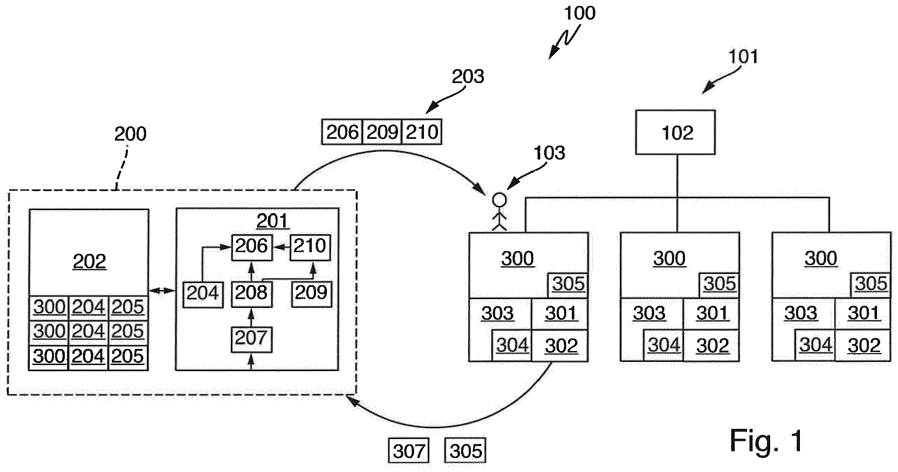

Figur 1 zeigt ein erfindungsgemäßes System der Automatisierungstechnik 100. Das System 100 umfasst eine Zugangsschlüsselgenerierungseinheit 201 zum Bereitstellen eines Zugangsschlüssels 203, eine Vielzahl von Feldgeräten 300 in denen jeweils zumindest ein individueller Schlüssel 304 hinterlegt ist und welche jeweils eine Recheneinheit 301 aufweisen sowie eine Datenbank 202 in der die individuellen Schlüssel 204 mit jeweils einem Identifikationsmerkmal 205 des jeweiligen Feldgerätes 300 zusammen hinterlegt sind.

Mit Hilfe des Systems 100 ist es möglich, einen Zugangsschlüssel 203, welcher nur für ein spezielles Feldgerät Gültigkeit besitzt, herzustellen. Dieser Zugangsschlüssel 203 kann bspw. durch einen Feldgerätehersteller 200 selbst erzeugt werden und bei Bedarf an einen Benutzer 103 des Feldgerätes 300 übermittelt werden. Benutzer 103 ist dabei jegliche Person, die Zugriff auf das Feldgerät 300 haben möchte. So kann der Benutzer 103 bspw. ein Servicetechniker aber auch der Techniker des Anlagenbetreibers sein.

Um das erfindungsgemäße Verfahren auszuführen ist es erforderlich, dass jedes Feldgerät 300, welches später über einen Zugangsschlüssel 203 freischaltbar sein soll, mit einem zufällig erzeugten individuellen Schlüssel 304, auch privater Schlüssel, secret Key oder private Key genannt, versehen wird. Dieser individuelle Schlüssel wird sowohl in den entsprechenden Feldgeräten 300 als auch in einer Datenbank 202 hinterlegt. In der Datenbank wird zusätzlich die Seriennummer als Identifikationsmerkmal 205 hinterlegt, sodass sich der individuelle Schlüssel 204 anhand des Identifikationsmerkmales 205 ermitteln lässt. Die Datenbank 202 wird dabei vorzugsweise durch den Feldgerätehersteller 200 betrieben und befindet sich somit außerhalb der Automatisierungsanlage 101 in der sich die Vielzahl von Feldgeräten 300 befindet.

In dem Feldgerät 300 wird der individuelle Schlüssel 304 in einem internen Speicher 303 hinterlegt. Der Schlüssel 304 wird dabei derartig hinterlegt, dass dieser nicht auslesbar und/oder überschreibbar und/oder zugreifbar durch einen Benutzer 103 ist. Ein Benutzer 103 hat somit keinerlei Möglichkeit an den Schlüssel 304 zu gelangen. Allerdings ist der im Feldgerät 300 hinterlegte bzw. in einem nicht auslesbaren Speicher 303 des Feldgerätes gespeicherte individuelle Schlüssel 304 von dem Feldgerät 200 selbst bzw. dessen interner Recheneinheit 301 verwendbar.

In dem Fall, dass für ein solches Feldgerät 300 ein Passwort verloren geht, kann nun mittels der Datenbank, ein Zugangsschlüssel 203 genau für dieses Feldgerät 300 erzeugt werden. Dies kann bspw. durch den Feldgerätehersteller 200, der die Datenbank 202 verwaltet, gemacht werden. Hierzu muss dem Feldgerätehersteller 200 das Identifikationsmerkmal 205, bspw. in Form der Seriennummer des entsprechenden Feldgerätes übermittelt werden.

Um dem Zugangsschlüssel 203 auch zeitlich zu limitieren, d.h. diesen auf eine vorbestimmte Gültigkeitsdauer zu beschränken, muss dem Feldgerätehersteller 200 zusätzlich eine Zeitinformation 307 des entsprechenden Feldgerätes 300 übermittelt werden. Eine derartige Zeitinformation 307 kann bspw. ein Wert eines Betriebsstundenzählers 302 des Feldgerätes 300 sein.

Anhand der so vorhandenen Daten kann die Zugangsschlüsselgenerierungseinheit 201 den Zugangsschlüssel 203 gemäß dem nachstehenden Verfahren bilden bzw. erzeugen bzw. generieren.

In einem ersten Schritt wird die Zeitinformation 307 in eine entsprechende binäre Form gewandelt, falls die Zeitinformation nicht bereits in dieser Form vorliegt. Die Zeitinformation 307 kann bereits in der binären Form von dem Feldgerät 300 übermittelt werden, sodass eine Wandlung nicht mehr nötig ist. Diese binäre Form wird als ein erster Zeitstempel 207 verwendet. Das Wandeln in eine binäre Form führt somit zu einer Zeitdiskretisierung, sodass die vorgegebene Gültigkeitsdauer nur entsprechend der Zeitschritte gewählt bzw. vorgegeben sein kann. Die Zeitschritte und somit der Diskretisierungsgrad kann dabei beliebig gewählt werden. Anhand des ersten Zeitstempels 207 wird ein zweiter binärer Zeitstempel 208 erzeugt, welcher entsprechend der vorgegebenen Zeitdauer mittels einer Bitmaske 209 an den relevanten niederwertigen Bits ausmaskiert wird. Ferner wird der ausmaskierte Teil oder zumindest ein Teil von diesem als ein Offsetwert 210 für die Erzeugung des Zugangsschlüssels gespeichert.

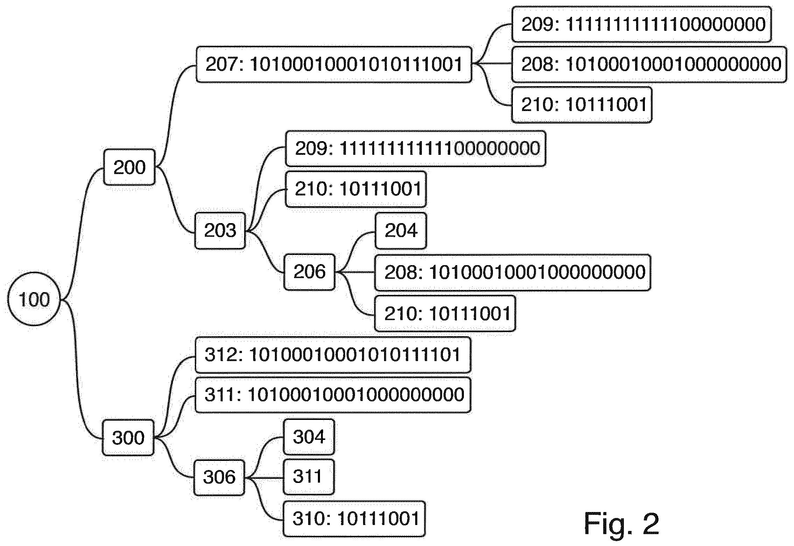

An Hand des nachfolgenden und in Fig. 2 dargestellten Beispiels soll dies exemplarisch verdeutlicht werden. Ausgehend von dem ersten Zeitstempel 207 mit dem binarischen Wert von 10100010001010111001, welcher einer Zeitinformation des Betriebsstundenzählers 302 von 664249 Stunden (exemplarisch, könnte aber genauso gut eine andere Zeiteinheit darstellen) zum Zeitpunkt der Anfrage beim Feldgerätehersteller für den Zugangsschlüssel entspricht, wird mittels der Bitmaske 209 mit einem binarischen Wert von 11111111111100000000, welche einer vorgegebenen Gültigkeitsdauer von 255 Stunden entspricht, der zweite maskierte Zeitstempel 208 mit einem binaren Wert von 10100010001000000000 erzeugt. Durch die Bitmaske 209 werden somit die letzten acht Bits, die für die gewünschte vorgegebene Gültigkeitsdauer von 255 Stunden relevant sind, ausmaskiert, wobei der ausmaskierte Teil mit einem binaren Wert von 10111001 als Offsetwert 210 gespeichert wird. Die Bitmaske entspricht somit der im binären Format negierten vorgegebenen Gültigkeitsdauer.

Im nächsten Schritt wird der zeitlich limitierte Zugangsschlüssel 203 generiert. Hierzu wird ein Hashwert 206 aus dem durch die Seriennummer bzw. das Identifikationsmerkmal 205 aus der Datenbank 202 ermittelten individuellen Schlüssel 204 und dem zweiten Zeitstempel 208 gebildet. Optional kann auch der Offsetwert 210 zur Bildung des Hashwertes 206 herangezogen werden. Der so gebildete Hashwert 206, die Bitmaske 209 oder ein Repräsentant für diese und der Offsetwert 210 werden anschließend zu dem Zugangsschlüssel 203 zusammen geführt. An dieser Stelle sei angemerkt, dass statt der Bitmaske 209 auch ein Repräsentant dieser Verwendung finden kann. Hierzu bedarf es allerdings einer globalen, d.h. sowohl auf Seite der Feldgeräte als auch auf Seite des Feldgeräteherstellers, Definition. Beispielsweise könnte eine Definition in einem einfachen Fall so aussehen, dass ein Repräsentant "A" einer Gültigkeitsdauer von einem Tag, ein Repräsentant "B" eine Gültigkeitsdauer von zwei Tagen, etc. bedeutet.

Der so erzeugte Zugangsschlüssel 203 ist somit spezifisch für ein Feldgerät generiert worden und kann nur an diesem erfolgreich eingegeben werden. Aufgrund der Zeitinformation 307 kann somit vorgesehen sein, dass der Zugangsschlüssel 203 nur für die vorgegebene Gültigkeitsdauer an dem Feldgerät erfolgreich eingegeben werden kann oder aber, dass nach Eingabe des Zugangsschlüssel 203 an dem Feldgerät 300, das Feldgerät 300 eine Funktion für die vorgegebene Gültigkeitsdauer ausführt.

Im Folgenden wird das Verfahren, welches eine Recheneinheit 301 des Feldgeräts 300 nach Eingabe des Zugangsschlüssels 203 ausführt, beschrieben.

In einem zur Berechnung eines Vergleichshashwerts 306 durch die Recheneinheit 301 vorgelagerten Schritt, greift die Recheneinheit 301 auf den internen Speicher 303 des Feldgerätes 300 zu, um den dort hinterlegten individuelle Schlüssel 304 zu ermitteln. Ebenfalls zur Bildung des Vergleichshashwerts 306 ermittelt die Recheneinheit 301 einen aktuellen Wert, d.h. einen Wert zum Zeitpunkt der Eingabe des Zugangsschlüssel, des Betriebsstundenzählers 302. Diesen Wert maskiert die Recheneinheit 301 mit der durch den eingegebenen Zugangsschlüssel 203 im Feldgerät 300 verfügbar gemachten Bitmaske 209. In dem Fall, dass über den Zugangsschlüssel 203 ein Repräsentant für die Bitmaske 209 in dem Feldgerät 300 verfügbar gemacht wird, ermittelt die Recheneinheit 301 eine für den Repräsentanten definierte Bitmaske zur Maskierung. Der maskierte aktuelle Wert wird anschließend als dritter Zeitstempel 311 zusammen mit dem individuellen Schlüssel 304 und optional dem Offsetwert 310, welcher durch die Eingabe des Zugangsschlüssel ebenfalls der Recheneinheit zugeführt wurde, zu Bildung des Vergleichshashwert 306 herangezogen.

Im Folgenden Schritt vergleicht die Recheneinheit 301 den Vergleichshashwert 306 mit dem Hashwert 206 des eingegebenen Zugangsschlüssels 203. In dem Fall, dass es zu Übereinstimmung kommt, führt die Recheneinheit 301 zumindest eine Funktion durch.

Beispielhaft kann die Recheneinheit 301 als Funktion eine Rücksetzung eines Passwortes des Feldgerätes 300 ausführen, einen Zugriff auf Parameterwerte des Feldgerätes 300 ermöglichen und/oder eine Softwarefunktionalität in Bezug auf das Feldgerät, bspw. eine "Heartbeat-Softwarefunktionalität", ausführen.

Aufgrund der im Zugangsschlüssel 203 mitgegebenen Gültigkeitsdauer kann gesteuert werden, ob der Zugangsschlüssel 203 nur für die die vorgegebene Gültigkeitsdauer an dem Feldgerät 300 erfolgreich eingegeben werden kann, sprich nur für die vorgegebene Gültigkeitsdauer Gültigkeit besitzt, oder ob die ausgeführte Funktion nur für die vorgegeben Gültigkeitsdauer ausgeführt wird und somit eine zeitliche Beschränkung der ausgeführten Funktion erfolgt.

### Bezugszeichenliste

- 100: System der Automatisierungstechnik
- 101: Automatisierungsanlage
- 102: Steuereinheit
- 103: Bediener
- 200: Feldgerätehersteller
- 201: Zugangsschlüsselgenerierungseinheit
- 202: Datenbank
- 203: Zugangsschlüssel
- 204: Individueller Schlüssel
- 205: Identifikationsmerkmal
- 206: Hashwert
- 207: Erster Zeitstempel
- 208: Zweiter Zeitstempel
- 209: Bitmaske
- 210: Offsetwert
- 300: Feldgerät
- 301: Recheneinheit
- 302: Betriebsstundenzähler
- 303: Interner Speicher
- 304: Individueller Schlüssel
- 305: Identifikationsmerkmal
- 306: Vergleichshashwert
- 307: Zeitinformation
- 309: Bitmaske
- 310: Offsetwert
- 311: Dritter Zeitstempel
- 312: Aktueller Wert des Betriebsstundenzählers

## Patentansprüche

1. Verfahren zum Bereitstellen eines Zugangsschlüssels (203) für ein Feldgerät (300) der Automatisierungstechnik, das anhand eines eingegebenen Zugangsschlüssels (203) freigeschaltet werden soll, wobei der Zugangsschlüssel (203) den Zugriff auf das Feldgerät (300), insbesondere dessen Parameter regelt, wobei das Verfahren die folgenden Schritte aufweist:
- Erzeugung eines für das Feldgerät individuellen Schlüssels (204, 304);
- Hinterlegen des individuellen Schlüssels (204) in einer Datenbank (202), wobei in der Datenbank (202) zusätzlich ein Identifikationsmerkmal (205) des Feldgerätes (300) zusammen mit dem individuellen Schlüssel (204) hinterlegt wird,
- Hinterlegung des individuellen Schlüssels (304) in dem Feldgerät (300);
- Ermittlung zumindest des Identifikationsmerkmales (205) des Feldgerätes (300) für welches der Zugangsschlüssel (203) bereitgestellt werden soll;
- Bildung/Erzeugung/Generierung des Zugangsschlüssels (203), sodass dieser zumindest einen Hashwert (206) umfasst, wobei der Hashwert (206) zumindest aus dem mit Hilfe des ermittelten Identifikationsmerkmals (205) aus der Datenbank (202) ausgelesenen individuellen Schlüssels (204) gebildet wird; und
- Übermittlung des Zugangsschlüssels (203) an das Feldgerät (300).

2. Verfahren nach Anspruch 1, wobei neben dem Identifikationsmerkmal (205) auch eine Zeitinformation (307) des Feldgerätes, für welches der Zugangsschlüssel (203) bereitgestellt werden soll, ermittelt wird und bei der Bildung/Erzeugung/Generierung dem Zugangsschlüssel (203) eine vorgegebene Gültigkeitsdauer mitgegeben wird.

3. Verfahren nach Anspruch 2, wobei die Zeitinformation (307) aus einem Wert eines Betriebsstundenzählers (302) des Feldgerätes (300) abgeleitet wird.

4. Verfahren nach einem der Ansprüche 2 oder 3, wobei die Zeitinformation in eine entsprechende binäre Form gewandelt wird und als ein erster Zeitstempel (207) verwendet wird, wobei der erste Zeitstempel (207) in einen zweiten Zeitstempel (208) überführt wird, bei dem die vorgegebene Gültigkeitsdauer in Form einer Bitmaske (209) der relevanten niederwertigen Bits ausmaskiert wird und zumindest ein Teil der ausmaskierten Bits als ein Offsetwert (210) gespeichert wird und wobei der Zugangsschlüssel (203) so gebildet/erzeugt/generiert wird, dass dieser zumindest die vorgegebene Gültigkeitsdauer in Form der Bitmaske (209) oder eines Repräsentanten für die Bitmaske, den Offsetwert (210) und den Hashwert (206) umfasst, wobei der Hashwert (206) zumindest aus dem mit Hilfe des ermittelten Identifikationsmerkmals (205) aus der Datenbank (202) ausgelesenen individuellen Schlüssel (204) und dem zweiten Zeitstempel (208) gebildet wird.

5. Verfahren nach dem Anspruch 4, wobei zur Bildung des Hashwerts (206) zusätzlich der Offsetwert (210) verwendet wird.

6. Feldgerät (300) der Automatisierungstechnik, umfassend:
- eine Recheneinheit (301)
- einen internen Speicher (303) in dem ein für das Feldgerät (300) individueller Schlüssel (304), vorzugsweise verschlüsselt, abgelegt ist, welcher individuelle Schlüssel (304) nach einem Verfahren nach zumindest einem der Ansprüche 1 bis 5 bereitgestellt ist, wobei auf den internen Speicher (303) nicht von außen
zugreifbar ist und der interne Speicher (303) nicht-auslesbar ist, so dass der individuelle Schlüssel (304) derartig hinterlegt ist, dass dieser nicht durch einen Benutzer (103) von außen auslesbar und/oder überschreibbar und/oder zugreifbar ist, wobei der individuelle Schlüssel (304) von dem Feldgerät selbst (300), insb. von seiner Recheneinheit (301), verwendbar ist;
- wobei bei Eingabe eines Zugangsschlüssels (203), welcher Zugangsschlüssel (203) nach einem Verfahren nach zumindest einem der Ansprüche 1 bis 5 bereitgestellt wird und welcher Zugangsschlüssel (203) zumindest einen Hashwert (206) umfasst, die Recheneinheit (301) dazu ausgelegt ist, die folgenden Schritte auszuführen:
- Berechnung/Bildung eines Vergleichshashwertes (306) anhand des in dem Feldgerät (300) hinterlegten Feldgerätindividuellen individuellen Schlüssels (304)
- Freischaltung bzw. Ausführung zumindest einer Funktion des Feldgerätes, in dem Fall, wenn der Vergleichshashwert (306) mit dem Hashwert (206) des eingegebenen Zugangsschlüssels (203) übereinstimmt.

7. Feldgerät (300) nach Anspruch 6, wobei die Recheneinheit (301) ferner dazu ausgelegt ist, als Funktion eine Rücksetzung eines Passwortes für die Zugriffsberechtigung des Feldgerätes (300) auszuführen.

8. Feldgerät (300) nach Anspruch 6, wobei die Recheneinheit (301) ferner dazu ausgelegt ist, als Funktion ein Zugriff auf Parameterwerte des Feldgerätes (300) zu ermöglichen.

9. Feldgerät (300) nach Anspruch 6, wobei die Recheneinheit (301) ferner dazu ausgelegt ist, als Funktion das Freischalten einer Softwarefunktionalität in Bezug auf das Feldgerät (300) auszuführen.

10. Feldgerät (300) nach einem der Ansprüche 6 bis 9, wobei die Recheneinheit (301) ferner dazu ausgelegt ist, die Freischaltung bzw. Ausführung der zumindest einen Funktion für eine durch den Zugangsschlüssel (203) vorgegebene Gültigkeitsdauer durchzuführen.

11. Feldgerät (300) nach einem der Ansprüche 6 bis 9, wobei die Recheneinheit (301) ferner dazu ausgelegt ist, die Freischaltung bzw. Ausführung der zumindest einen Funktion nur während einer durch den Zugangsschlüssel (203) vorgegebenen Gültigkeitsdauer durchzuführen.

12. Feldgerät (300) nach einem der Ansprüche 6 bis 11, wobei der Zugangsschlüssel (203) ferner einen Offsetwert (210) und eine Bitmaske (209) oder deren Repräsentant umfasst, wobei der Vergleichshashwert (306) anhand des in dem Feldgerät (300) hinterlegten individuellen Schlüssels (304), des durch den Zugangsschlüssel (203) eingegebenen Offsetwerts (210) und eines dritten Zeitstempels (311) gebildet wird, wobei der dritte Zeitstempel (311) durch Subtraktion des Offsetwerts (210) von einem aktuellen Wert (312) eines Betriebsstundenzählers (302) und anschließender Ausmaskierung der relevanten niederwertigen Bits anhand der Bitmaske (209) oder deren Repräsentant ermittelt wird.

13. Zugangsschlüssel (203) für ein Feldgerät (300) der Automatisierungstechnik, welcher zumindest einen Hashwert (206), einen Offsetwert (210) und eine Bitmaske (209) oder deren Repräsentanten aufweist, und wobei der Zugangsschlüssel (203) mittels eines Verfahrens nach zumindest einem der Ansprüche 1 bis 5 bereitgestellt wird.

14. System der Automatisierungstechnik aufweisend:
- eine Vielzahl von Feldgeräten (300), die gemäß zumindest einem der Ansprüche 6 bis 12 ausgebildet sind;
- eine Datenbank (202) eines Feldgeräteherstellers, (200) in der die individuellen Schlüssel (204), vorzugsweise verschlüsselt, mit jeweils einem Identifikationsmerkmal (205) des jeweiligen Feldgerätes (300) zusammen hinterlegt sind;
- eine Zugangsschlüsselgenerierungseinheit (201) zum Bereitstellen eines Zugangsschlüssels (203) für Feldgeräte (300) der Automatisierungstechnik, wobei die Zugangsschlüsselgenerierungseinheit (201) derartig eingerichtet ist, dass sie das Verfahren nach einem der Ansprüche 1 bis 5 durchführt.

15. System nach Anspruch 14, wobei die Vielzahl von Feldgeräten (300) sich in einer Automatisierungsanlage (101) befindet,und wobei die Datenbank (202) des Feldgeräteherstellers (200) außerhalb der Automatisierungsanlage (101) angeordnet ist.

## Claims

1. Procedure for the provision of an access key (203) for a field device (300) used in automation engineering, wherein said device is to be enabled using an access key (203) that is entered, wherein the access key (203) regulates access to the field device (300), particularly to its parameters, wherein said procedure comprises the following steps:
- Generation of an individual key (204, 304) for the field device
- Storage of the individual key (204) in a database (202), wherein an identification attribute (205) of the field device (300) is additionally saved in the database (202) together with the individual key (204),
- Storage of the individual key (304) in the field device (300);
- Determination of at least the identification attribute (205) of the field device (300) for which the access key (203) is to be made available;
- Formation/creation/generation of the access key (203) in such a way that the key at least comprises a hash value (206), wherein the hash value (206) is formed at least from the individual key (204) read out of the database (202) using the identification attribute (205) that has been determined; and
- Transmission of the access key (203) to the field device (300).

2. Procedure as claimed in Claim 1, wherein, apart from the identification attribute (205), time information (307) is also determined for the field device for which the access key (203) should be provided and wherein a prespecified period of validity is assigned to the access key (203) during the formation/creation/generation process.

3. Procedure as claimed in Claim 2, wherein the time information (307) is derived from a value of an operating hours counter (302) of the field device (300).

4. Procedure as claimed in one of the Claims 2 or 3, wherein the time information is converted to a corresponding binary form and is used as a first time stamp (207), wherein the first time stamp (207) is converted to a second time stamp (208) where the procedure masks out the predetermined period of validity in the form of a bit mask (209) of the relevant low-value bits and wherein at least a part of the masked out bits is saved as an offset value (210) and wherein the access key (203) is formed/created/generated in such a way that it comprises at least the predefined period of validity in the form of the bit mask (209) or a representative for the bit mask, the offset value (210) and the hash value (206), wherein the hash value (206) is formed at least from the individual key (204) read out of the database (202) using the identification attribute (205) determined and the second time stamp (208).

5. Procedure as claimed in Claim 4, wherein the offset value (210) is also used to form the hash value (206).

6. Field device (300) used in automation engineering, wherein said device comprises:
- a computer unit (301)
- an internal memory (303) in which an individual key (304) for the field device (300) is stored, preferably encrypted, wherein said individual key (304) is made available according to a procedure as claimed in at least one of the Claims 1 to 5, wherein the internal memory (303) cannot be accessed from the outside and wherein the internal memory (303) cannot be read out, such that the individual key (304) is saved in such a way that it cannot be read out and/overwritten and/or accessed from the outside by a user (103), wherein the individual key (304) can be used by the field device (300) itself, particularly by its computer unit (301);
- wherein the computer unit (301) is designed to perform the following steps when an access key (203) is entered, wherein said access key (203) is supplied according to a procedure as claimed in at least one of the Claims 1 to 5 and wherein said access key (203) comprises at least a hash value (206):
- Calculation/formation of a comparison hash value (306) using the key (304) that is individualized for the field device (300) and saved in the field device
- Activation or execution of at least a function of the field device in the event that the comparison hash value (306) matches the hash value (206) of the access key (203) that is entered.

7. Field device (300) as claimed in Claim 6, wherein the computer unit (301) is further designed to perform, as a function, the resetting of a password for access authorization of the field device (300).

8. Field device (300) as claimed in Claim 6, wherein the computer unit (301) is further designed to enable, as a function, access to parameter values of the field device (300).

9. Field device (300) as claimed in Claim 6, wherein the computer unit (301) is further designed to perform, as a function, the enabling of a software functionality in relation to the field device (300).

10. Field device (300) as claimed in one of the Claims 6 to 9, wherein the computer unit (301) is further designed to perform the activation or execution of the at least one function for a predefined period of validity for the access key (203).

11. Field device (300) as claimed in one of the Claims 6 to 9, wherein the computer unit (301) is further designed to perform the activation or execution of the at least one function only during a period of validity that is predefined for the access key (203).

12. Field device (300) as claimed in one of the Claims 6 to 11, wherein the access key (203) further comprises an offset value (210) and a bit mask (209) or its representative, wherein the comparison hash value (306) is formed using the individual key (304) saved in the field device (300), the offset value (210) entered by the access key (203) and a third time stamp (311), wherein the third time stamp (311) is determined by subtracting the offset value (210) from a current value (312) of an operating hours counter (302) and by subsequently masking out the relevant low-value bits using the bit mask (209) or its representative.

13. Access key (203) for a field device (300) used in automation technology, wherein the key has at least a hash value (206), an offset value (210) and a bit mask (209) or representatives of same, and wherein the access key (203) is provided using a procedure as claimed in at least one of the Claims 1 to 5.

14. Automation technology system comprising:
- multiple field devices (300) that are designed according to at least one of the Claims 6 to 12;
- a database (202) of a field device manufacturer (200) in which the individual keys (204), preferably encrypted, are stored together with an identification attribute (205) of the respective field device (300);
- an access key generation unit (201) designed to provide an access key (203) for the automation engineering field devices (300), wherein the access key generation unit (201) is set up in such a way that it performs the procedure as claimed in one of the Claims 1 to 5.

15. System as claimed in Claim 14, wherein the multiple field devices (300) are located in an automation installation (101), and wherein the database (202) of the field device manufacturer (200) is outside the automation installation (101).

## Revendications

1. Procédé destiné à la mise à disposition d'une clé d'accès (203) pour un appareil de terrain (300) de la technique d'automatisation, lequel appareil doit être libéré à l'aide d'une clé d'accès (203) introduite, la clé d'accès (203) réglant l'accès à l'appareil de terrain (300), notamment à ses paramètres, lequel procédé comprend les étapes suivantes :
- Création d'une clé (204, 304) individuelle pour l'appareil de terrain
- Dépôt de la clé individuelle (204) dans une base de données (202), une caractéristique d'identification (205) de l'appareil de terrain (300) étant en outre déposée avec la clé individuelle (204) dans la base de données (202),
- Dépôt de la clé individuelle (304) dans l'appareil de terrain (300) ;
- Détermination d'au moins la caractéristique d'identification (205) de l'appareil de terrain (300) pour lequel la clé d'accès (203) doit être mise à disposition ;
- Formation/création/génération de la clé d'accès (203), de sorte que celle-ci comprend au moins une valeur de hachage (206), la valeur de hachage (206) étant formée au moins à partir de la clé individuelle (204) lue dans la base de données (202) à l'aide de la caractéristique d'identification (205) déterminée ; et
- Transmission de la clé d'accès (203) à l'appareil de terrain (300).

2. Procédé selon la revendication 1, pour lequel, outre la caractéristique d'identification (205), on détermine également une information temporelle (307) de l'appareil de terrain pour lequel la clé d'accès (203) doit être mise à disposition et, lors de la formation/création/génération, on attribue à la clé d'accès (203) une durée de validité prédéterminée.

3. Procédé selon la revendication 2, pour lequel l'information temporelle (307) est dérivée d'une valeur d'un compteur d'heures de fonctionnement (302) de l'appareil de terrain (300).

4. Procédé selon l'une des revendications 2 ou 3, pour lequel l'information temporelle est convertie en une forme binaire correspondante et est utilisée comme premier horodateur (207), le premier horodateur (207) étant converti en un deuxième horodateur (208), la durée de validité prédéterminée étant masquée sous la forme d'un masque de bits (209) relatif aux bits de poids faible pertinents et au moins une partie des bits masqués est stockée sous la forme d'une valeur de décalage (210) et la clé d'accès (203) étant formée/créée/générée de telle manière que celle-ci comprend au moins la durée de validité prédéfinie sous la forme du masque de bits (209) ou d'un représentant pour le masque de bits, la valeur de décalage (210) et la valeur de hachage (206), la valeur de hachage (206) étant formée au moins à partir de la clé individuelle (204) lue dans la base de données (202) à l'aide de la caractéristique d'identification (205) déterminée et du deuxième horodateur (208).

5. Procédé selon la revendication 4, pour lequel on utilise en outre la valeur de décalage (210) pour former la valeur de hachage (206).

6. Appareil de terrain (300) de la technique d'automatisation, lequel appareil comprend :
- une unité de calcul (301)
- une mémoire interne (303) dans laquelle est stockée une clé (304) individuelle pour l'appareil de terrain (300), de préférence cryptée, laquelle clé individuelle (304) est mise à disposition d'après un procédé selon au moins l'une des revendications 1 à 5, la mémoire interne (303) n'étant pas accessible de l'extérieur et la mémoire interne (303) n'étant pas lisible, de sorte que la clé individuelle (304) est déposée de telle sorte qu'elle n'est pas lisible et/ou réinscriptible et/ou accessible de l'extérieur par un utilisateur (103), la clé individuelle (304) étant utilisable par l'appareil de terrain lui-même (300), notamment par son unité de calcul (301) ;
- appareil pour lequel, lors de l'entrée d'une clé d'accès (203), laquelle clé d'accès (203) est fournie d'après un procédé selon au moins l'une des revendications 1 à 5 et laquelle clé d'accès (203) comprend au moins une valeur de hachage (206), l'unité de calcul (301) est conçue pour exécuter les étapes suivantes :
- Calcul/formation d'une valeur de hachage de comparaison (306) à l'aide de la clé individuelle (304) propre à l'appareil de terrain (300) déposée dans celui-ci
- Activation ou exécution d'au moins une fonction de l'appareil de terrain, dans le cas où la valeur de hachage de comparaison (306) coïncide avec la valeur de hachage (206) de la clé d'accès (203) introduite.

7. Appareil de terrain (300) selon la revendication 6, pour lequel l'unité de calcul (301) est en outre conçue pour exécuter comme fonction une réinitialisation d'un mot de passe pour l'autorisation d'accès de l'appareil de terrain (300).

8. Appareil de terrain (300) selon la revendication 6, pour lequel l'unité de calcul (301) est en outre conçue pour permettre, en tant que fonction, un accès à des valeurs de paramètres de l'appareil de terrain (300).

9. Appareil de terrain (300) selon la revendication 6, pour lequel l'unité de calcul (301) est en outre conçue pour exécuter, en tant que fonction, la libération d'une fonctionnalité logicielle par rapport à l'appareil de terrain (300).

10. Appareil de terrain (300) selon l'une des revendications 6 à 9, pour lequel l'unité de calcul (301) est en outre adaptée pour réaliser l'activation ou l'exécution de l'au moins une fonction pendant une durée de validité prédéterminée par la clé d'accès (203).

11. Appareil de terrain (300) selon l'une des revendications 6 à 9, pour lequel l'unité de calcul (301) est en outre conçue pour n'effectuer l'activation ou l'exécution d'au moins une fonction que pendant une durée de validité prédéfinie par la clé d'accès (203).

12. Appareil de terrain (300) selon l'une des revendications 6 à 11, pour lequel la clé d'accès (203) comprend en outre une valeur de décalage (210) et un masque de bits (209) ou son représentant, la valeur de hachage de comparaison (306) étant déterminée à l'aide de la clé individuelle (304) enregistrée dans l'appareil de terrain (300), de la valeur de décalage (210) introduite par la clé d'accès (203) et d'un troisième horodateur (311), le troisième horodateur (311) étant déterminé par soustraction de la valeur de décalage (210) d'une valeur actuelle (312) d'un compteur d'heures de fonctionnement (302) et par masquage ultérieur des bits de poids faible pertinents à l'aide du masque de bits (209) ou de son représentant.

13. Clé d'accès (203) pour un appareil de terrain (300) de la technique
d'automatisation, laquelle clé présente au moins une valeur de hachage (206), une valeur de décalage (210) et un masque de bits (209) ou leurs représentants, la clé d'accès (203) étant mise à disposition au moyen d'un procédé selon au moins l'une des revendications 1 à 5.

14. Système de la technique d'automatisation, lequel système comprend :
- une pluralité d'appareils de terrain (300), qui sont conçus selon au moins l'une des revendications 6 à 12 ;
- une base de données (202) d'un fabricant d'appareils de terrain (200) dans laquelle les clés individuelles (204), de préférence codées, sont déposées ensemble avec respectivement une caractéristique d'identification (205) de l'appareil de terrain (300) respectif ;
- une unité de génération de clé d'accès (201) destinée à mettre à disposition une clé d'accès (203) pour des appareils de terrain (300) de la technique d'automatisation, l'unité de génération de clé d'accès (201) étant agencée de telle sorte qu'elle exécute le procédé selon l'une des revendications 1 à 5.

15. Système selon la revendication 14, pour lequel la pluralité d'appareils de terrain (300) se trouve dans une installation d'automatisation (101), et système pour lequel la base de données (202) du fabricant d'appareils de terrain (200) est disposée à l'extérieur de l'installation d'automatisation (101).
